# FASCICULE DE BREVET EUROPEEN

(11) **EP 3 877 082 B1**
(45) Date de publication et mention de la délivrance du brevet: **10.04.2024**
(21) Numéro de dépôt: 19795596.6
(22) Date de dépôt: 06.11.2019
(51) Int. Cl.: B01J 20/20, B01J 20/28, C01B 32/15, C04B 28/02

(54) **MORTIER OU ENDUIT POUR REVETEMENT D'INTERIEUR**
MÖRTEL ODER BESCHICHTUNG FÜR EINE INNENVERKLEIDUNG
MORTAR OR COATING FOR AN INNER COVERING

(30) Priorité: 06.11.2018 FR 1860196
(43) Date de publication de la demande: 15.09.2021
(73) Titulaire: Saint-Gobain Weber, 94370 Sucy-en-Brie (FR)
(72) Inventeur: MORO, Solenn, 75019 PARIS (FR); MIALON, Geneviève, 75019 PARIS (FR); MAIER, Wolfram, 79194 GUNDELFINGEN (DE); GOLDENBERG, Virginie, 93300 AUBERVILLIERS (FR)
(74) Mandataire: Saint-Gobain Recherche
(86) Numéro de dépôt international: PCT/EP2019/080404
(87) Numéro de publication internationale: WO 2020/094722

(56) Documents cités:
- EP-A2- 1 847 318
- FR-A1- 2 951 088
- Calgoncarbon: "Data Sheet Safety Message", , 1 janvier 2012 (2012-01-01), XP055622061, Extrait de l'Internet: URL:https://www.calgoncarbon.com/app/uploa ds/DS-FILTRA40017-EIN-E1.pdf [extrait le 2019-09-13]

## Description

La présente invention concerne le domaine des mortiers ou enduits, plus précisément le domaine des mortiers ou enduits d'intérieur, et en particulier des mortiers ou enduits utilisés comme sous-couche (ou couche de base devant notamment recevoir une couche de finition), notamment en couche épaisse (d'au moins 0.5 cm, voire d'au moins 1 cm, d'épaisseur), pour revêtir tout ou partie d'une surface tournée vers l'intérieur d'un bâtiment.

Le terme mortier désigne un mélange apte à être utilisé en maçonnerie, généralement sous forme sèche (poudre) ou pâteuse, et usuellement formé d'au moins un liant (en particulier minéral, notamment à base de ciment), d'agrégats ou granulats ou sables et/ou de charges minérales finement broyées appelées fillers, et d'additif(s), le terme enduit désignant généralement le mortier lorsqu'il est sous sa forme appliquée (par exemple appliquée sur un mur).

Les mortiers ou enduits plus particulièrement visés dans la présente invention sont plus spécifiquement conçus pour être utilisés pour le revêtement intérieur de constructions, par exemple pour revêtir des parois murales, sols et/ou plafonds à l'intérieur de bâtiments.

La demande de brevet EP 1847318 A2 décrit une composition convenable pour revêtement d'intérieur, cette composition comprenant au moins un liant minéral, et comprenant également généralement au moins des granulats ou fillers, ladite composition étant caractérisée en ce qu'elle comprend en outre entre 1 et 10% en poids d'au moins un charbon actif présentant une surface spécifique supérieure ou égale à 875 m²/g et inférieure ou égale à 1200 m2/g.

Le confort à l'intérieur des bâtiments, en particulier en matière de qualité de l'air, est de plus en plus au coeur des préoccupations des occupants et des constructeurs. Il est connu que divers matériaux ou éléments utilisés dans les bâtiments (matériaux de construction, produits de finition, mobilier, etc) renferment et libèrent dans le temps des composants organiques volatils (COV), tels que des hydrocarbures (éventuellement halogénés), des alcools, des acides organiques, des esters ou des aldéhydes (comme le formaldéhyde, l'acétaldéhyde ou l'hexanal), ces composants pouvant à la longue incommoder voire affecter la santé des personnes qui y sont exposées.

Selon l'Organisation Mondiale de la Santé, tous les composés organiques (substances constituées principalement de carbone et d'hydrogène) dont les points d'ébullition se situent entre 50 et 260° C, à l'exception des pesticides, sont comptés parmi les COV. Les composants organiques volatils peuvent être émis pendant des durées allant de plusieurs jours à plusieurs années selon la nature et le type de matériau(x) dont ils sont issus. Pour éviter leur accumulation dans l'atmosphère, il est recommandé d'aérer régulièrement les pièces de vie. Parallèlement, la réglementation en matière de protection contre les émissions de produits potentiellement nocifs pour la santé devient de plus en plus stricte et impose de réduire le plus possible l'émission de ces polluants. Lorsque ce n'est pas possible de l'éviter, des techniques de type destructives (procédés d'oxydation, d'irradiation, ou biologiques) ou récupératrices (condensation, adsorption, absorption, ou procédés membranaires) peuvent être envisagées. Les matériaux de construction à propriétés purificatrices d'air existants font par exemple appel à la technique de l'oxydation photocatalytique avec des particules d'oxyde de titane qui peuvent être incorporées dans des compositions de mortiers, l'inconvénient étant principalement la nécessité d'avoir une source de lumière appropriée pour que le processus se fasse efficacement ; ils peuvent aussi incorporer des adsorbants ou chimisorbants, par exemple en déposant un film contenant un agent apte à réagir avec le formaldéhyde, choisi notamment parmi les composés à méthylènes actifs, les tannins, les amides et les hydrazides. Cet agent ne doit cependant pas laisser de traces ni provoquer de décoloration de la surface sur laquelle il est déposé, et ne doit pas dégager d'odeurs nauséabondes ni provoquer d'émissions opposées à l'effet recherché. Les acétoacétamides, connus comme agents piégeurs de formaldéhyde, ne conviennent ainsi pas à l'application recherchée, car, incorporés dans un enduit à base de ciment, ils entrainent rapidement l'apparition d'une odeur d'ammoniac due à l'hydrolyse de l'amide en conditions alcalines (odeur qui n'apparait pas par exemple en pH neutre dans un enduit plutôt à base de plâtre), une décoloration jaune-brune inesthétique apparaissant également en surface de l'enduit.

En outre, si certains agents utilisés dans les mortiers peuvent permettre de piéger efficacement des aldéhydes (en particulier le formaldéhyde), par exemple des agents choisis parmi les aminoalcools, ils s'avèrent généralement inefficaces pour piéger d'autres composés organiques volatils (tels que xylène, toluène, éthylbenzène, décane, etc).

Un autre type de problématique rencontré dans les bâtiments est lié à l'humidité, laquelle peut être importante dans certaines pièces et entrainer notamment des moisissures ; inversement un air trop sec ou des variations importantes d'humidité peuvent également nuire au confort des occupants. Il est connu pour remédier aux problèmes d'humidité d'utiliser d'autres types de composés captant les molécules d'eau (qui sont polaires), par exemple des minéraux de type montmorillonite composés de silicate d'aluminium et de magnésium, ce genre de composés n'ayant par contre aucun effet sur le piégeage d'une grande partie des composés organiques volatils qui sont pour nombre d'entre eux apolaires (tels que : xylène, éthylbenzène, décane, etc). En outre, il n'est souvent pas suffisant de simplement capter les molécules d'eau, le relargage d'eau pouvant également être recherché dans le cas où l'air est ou devient trop sec.

La résolution de ces différentes problématiques oblige donc le cas échéant à combiner différents types de solutions et/ou composés, parfois antinomiques.

La présente invention vise ainsi à proposer un nouveau mortier ou enduit, en particulier pour revêtement d'intérieur, et notamment pour l'utilisation comme sous-couche, cette sous-couche étant destinée par exemple à niveler et/ou protéger une surface à revêtir avant l'application de la couche de finition (à caractère généralement principalement esthétique), ce mortier ou enduit possédant à la fois des propriétés de purification de l'air ambiant eu égard aux différents types de composés volatils organiques (COV) pouvant s'y trouver et des propriétés de régulation de l'humidité, la purification relative aux COV ne se limitant pas qu'à celle du formaldéhyde mais concernant également d'autres COV en particulier apolaires (tels que le xylène, toluène, éthylbenzène, décane...), et les COV captés par le mortier ne subissant pas en outre de désorption à température ambiante, et les propriétés de régulation de l'humidité ne consistant pas seulement en des propriétés de captage d'humidité mais permettant tour à tour de capter l'excès d'humidité et de re-libérer cette humidité si en revanche l'air devient trop sec et/ou lorsque l'on ventile la pièce.

Ce but est atteint grâce au mortier ou enduit selon l'invention. La présente invention porte donc sur une composition de mortier ou enduit pour revêtement d'intérieur, cette composition comprenant au moins un liant, en particulier minéral, et notamment à base de ciment et de chaux, et cette composition comprenant également généralement au moins des granulats et/ou agrégats et/ou sables et/ou fillers, ladite composition étant caractérisée en ce qu'elle comprend en outre entre 1 et 10% en poids de ladite composition en sec d'au moins un charbon actif, préférentiellement (incorporé) sous forme granulaire, présentant (initialement, avant incorporation dans le mortier) :
- une surface spécifique supérieure ou égale à 875 m²/g et inférieure ou égale à 1200 m²/g et/ou un indice d'iode supérieur ou égal à 900 mg/g et/ou une capacité de sorption d'au moins 7 mg de toluène par g de charbon actif, et
- une variation de masse moyenne Δ_{m(S)} en sorption d'au moins 2% et une variation de masse Δ_{m(D4)} après 4 cycles de sorption/désorption d'au plus 1.5%.

Les caractéristiques du charbon actif précité sélectionné selon l'invention sont celles du charbon actif initial (c'est-à-dire non encore incorporé dans la composition de mortier), tel qu'il est ajouté dans la composition de mortier.

Préférentiellement, le charbon actif utilisé dans la composition de mortier selon l'invention est (initialement) de type granulaire (ou sous forme granulaire ou de granulés), c'est-à-dire formé de particules de formes irrégulières dans une gamme de taille principalement de l'ordre de 0.2 mm à 5 mm, par opposition à d'autres formes de charbon actif existantes qui sont la forme en poudre (de taille inférieure, généralement inférieure à 0.18 mm) ou la forme extrudée (de forme régulière). Les particules du charbon actif granulaire utilisé sont en particulier majoritairement (à au moins 90% en poids (ou en masse), en particulier à au moins 95% en poids, voire 100% en poids) de taille (plus grande dimension de chaque particule) comprise entre 0.2 mm et 5 mm (bornes incluses), en particulier comprise entre 0.2 et 2 mm, voire notamment à au moins 90% en poids de taille comprise entre 0.42 mm et 1.7 mm (bornes incluses), la taille des particules étant évaluée en particulier par tamisage (notamment à l'aide de tamis référencés 12 et 40 en taille de Mesh US).

Préférentiellement, la masse volumique (également appelée usuellement densité) du charbon actif sélectionné est en outre relativement élevée, participant le cas échéant à une activité importante dudit charbon dans la présente invention, cette masse volumique (masse volumique apparente) étant supérieure ou égale à 400 kg/m³, de préférence supérieure ou égale à 440 kg/m³, voire supérieure ou égale à 500 kg/m³, voire supérieure ou égale à 530 ou 540 kg/m³, la masse volumique apparente du charbon actif utilisé étant déterminée en faisant le rapport de la masse d'un volume donné du matériau, sur ledit volume.

Le charbon actif incorporé dans la composition de mortier selon l'invention est sélectionné de façon à présenter une porosité particulière se traduisant notamment par une surface spécifique supérieure ou égale à 875 m²/g et inférieure ou égale à 1200 m²/g et/ou par un indice d'iode supérieur ou égal à 900 mg/g et/ou par une capacité de sorption d'au moins 7 mg de toluène par g de charbon actif.

La surface spécifique (initiale) (des particules) du charbon actif sélectionné est mesurée par adsorption d'azote (théorie de l'adsorption multiple des gaz à l'aide de déterminations de Brunauer, Emmett et Teller- méthode BET), conformément notamment à la norme ISO 9277 : 2010, et est, selon un premier mode avantageux selon l'invention, supérieure ou égale à 875 m²/g, et de préférence supérieure ou égale à 900 m²/g, en particulier supérieure à 900 m²/g, notamment supérieure ou égale à 950 m²/g, voire supérieure ou égale à 1000 m²/g, et en outre est de préférence inférieure à 1200 m²/g, en particulier inférieure ou égale à 1100 m²/g.

L'indice d'iode (iodine number) représente la masse d'iode (en milligrammes) absorbée par gramme de charbon, cet indice étant mesuré en particulier selon la norme ASTM D4607-14 pour une concentration en iode résiduel dans le filtrat de 0,02 N. L'indice d'iode est un indicateur relatif de porosité et peut le cas échéant aussi être considéré comme un indicateur de la surface spécifique du charbon actif. Selon un mode de réalisation avantageux de l'invention, il est supérieur ou égal à 900 mg/g, voire supérieur ou égal à 1000 mg/g.

La capacité de sorption du charbon est déterminée de la façon suivante: la concentration en toluène est mesurée au cours du temps par spectrométrie de masse SIFT-MS (Sélective Ion Flow Tube-Mass Spectrometry) à la sortie d'un réacteur en U où est contenu le matériau (le charbon pur) à tester. La concentration en toluène est d'abord mesurée en sortie de réacteur vide (sans échantillon) au cours du temps jusqu'à atteindre un palier qui correspond à la concentration initialement générée, afin de déterminer la courbe de mélange. Le matériau à tester est ensuite placé dans le réacteur puis la même concentration est générée de la même manière. La concentration en toluène en sortie de réacteur est ensuite mesurée au cours du temps. Un retard temporel est observé par rapport à la courbe de mélange pour ensuite atteindre l'état d'équilibre entre le toluène en phase gazeuse et le toluène adsorbé à la surface du matériau. Cet écart temporel correspond à une adsorption de toluène par le matériau testé. Une intégration permet alors de calculer l'aire entre les deux courbes et de déterminer la quantité de toluène adsorbée par le matériau, à la concentration considérée. Dans les mesures effectuées pour déterminer la capacité de sorption du charbon actif dans la présente invention, la concentration en toluène (pur) de l'air d'alimentation est de 360 µg/m³. Selon un mode de réalisation avantageux de l'invention, le charbon actif est sélectionné de façon à présenter une capacité de sorption d'au moins 7 mg de toluène par g de charbon actif, de préférence d'au moins 8 mg de toluène par g de charbon actif, en particulier d'au moins 9 mg de toluène par g de charbon actif.

Les indicateurs précédents sont liés à une certaine porosité du charbon actif sélectionné, lequel intègre avantageusement différents types de pores pouvant participer, chacun de façon différente, à la sorption des COV, et à la sorption ou la désorption des molécules d'eau. Le charbon actif sélectionné comprend ainsi avantageusement à la fois des micropores (de diamètres généralement inférieurs à 2 nm), et des mésopores (de diamètres généralement compris entre 2 et 50 nm), le diamètre (diamètre équivalent) qualifiant la taille des pores étant calculé à partir des mesures de volumes poreux effectuées par exemple en utilisant la méthode BET citée précédemment.

La nature ou l'origine du charbon actif utilisé influant le cas échéant sur la porosité, le charbon actif utilisé dans la composition de mortier selon l'invention est en particulier choisi, dans un mode de réalisation avantageux selon l'invention, parmi les charbons actifs produits à partir (ou issus) de la houille (bituminous coal). Les charbons actifs peuvent en effet classiquement être fabriqués par pyrolyse de différentes matières premières carbonées telles que le bois, les coques de noix de coco ou d'autres matières organiques végétales, la houille, etc, les plus couramment utilisés étant ceux obtenus à partir de coques de noix de coco. L'utilisation d'un charbon actif défini selon l'invention et issu de la houille dans la composition de mortier a permis d'obtenir des résultats particulièrement avantageux en terme d'obtention et de juste équilibre des diverses propriétés recherchées, comme illustré ultérieurement.

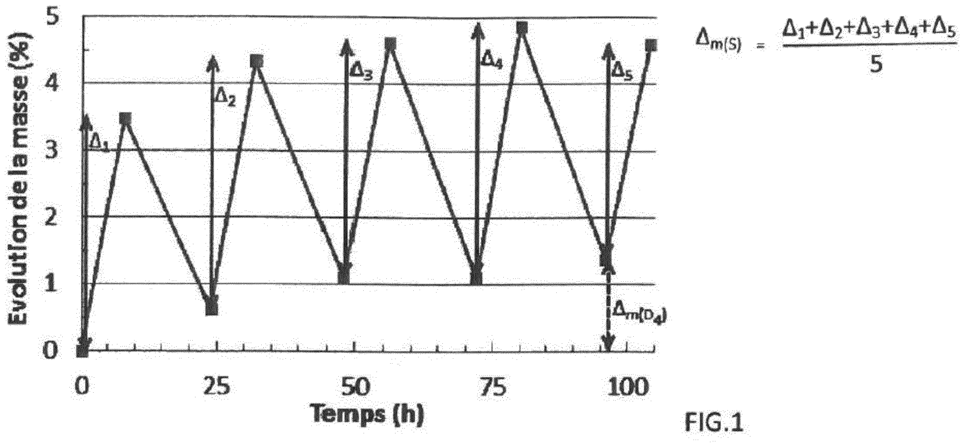

Comme défini précédemment, le charbon actif sélectionné selon l'invention présente également une variation de masse moyenne Δ_{m(S)} en sorption d'au moins 2%, et en particulier d'au moins 2.5%, voire d'au moins 3%, et une variation de masse Δ_{m(D4)} après 4 cycles de sorption/désorption d'au plus 1.5%, voire d'au plus 1.4%. Ces valeurs sont déterminées dans la présente invention en plaçant l'échantillon de charbon à tester dans un bécher de 7.4 cm de diamètre jusqu'à l'obtention d'une épaisseur d'échantillon de 2 cm, l'ensemble étant placé dans une enceinte climatique Terchy et maintenu pendant 2 jours à une température de 23°C à une humidité relative de 33%, avant d'être soumis à 4 cycles de sorption/désorption (présentant chacun une phase de sorption suivie par une phase de désorption) et à une cinquième phase de sorption intervenant à la fin des 4 cycles, avec une durée d'exposition de 8 heures en (ad)sorption à 75% d'humidité relative et de 16 heures en désorption à 33% d'humidité relative. La masse de l'échantillon est mesurée à la fin de chaque phase de sorption (soit 5 mesures en sorption) et de chaque phase de désorption (soit 4 mesures en désorption) de façon à tracer des profils de variation de masse (en % par rapport à la masse de départ de l'échantillon (masse au début du premier cycle)) au cours du temps, la variation de masse moyenne Δ_{m(S)} (en %) en sorption (ou au cours des phases de sorption) correspondant à la moyenne arithmétique des variations de masses pour chacune des phases de sorption (moyenne de 5 valeurs) et la variation de masse Δ_{m(D4)} (en %) étant évaluée à la fin de la phase de désorption du 4ème cycle (dernière variation de masse en désorption) après les 4 cycles de sorption/désorption, comme illustré ultérieurement en figure 1, cette dernière valeur permettant notamment d'évaluer la symétrie/dissymétrie de la sorption/désorption d'eau.

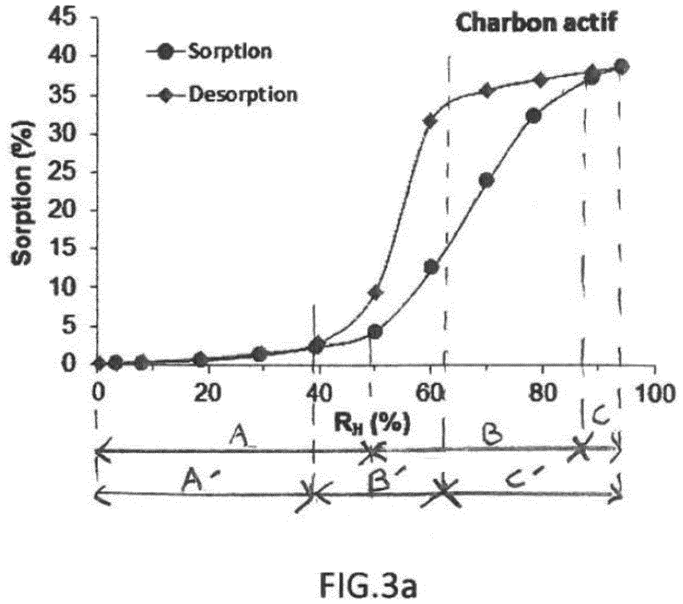

Le charbon actif sélectionné présente également avantageusement des isothermes (représentant le taux en poids (ou masse) d'eau capté par le charbon actif par rapport à l'humidité relative de l'air ambiant) de sorption et de désorption (de vapeur d'eau) de forme sigmoïde (ou forme en S) présentant une première zone de sorption, respectivement de désorption, faible (avec une teneur en eau dudit charbon actif inférieure à 5% en poids) jusqu'à au moins 30 %, ou au moins 40% (et au plus 60%), d'humidité relative de l'air ambiant, et une deuxième zone de sorption, respectivement de désorption, forte (comparativement à la première zone, avec une variation de la teneur en eau du charbon allant de 5%, ou moins, en poids à au moins 30% en poids) se situant à l'intérieur de la plage allant de 30% à 80%, en particulier de 40 à 80%, d'humidité relative de l'air ambiant. Plus précisément, le charbon actif présente un isotherme de sorption (respectivement de désorption) dit "de type V" (sur le modèle des représentations données notamment dans la nomenclature de l'UICPA (ou IUPAC)), intégrant (comme illustré en figure 3a) une première ("première" et "deuxième" servant juste à distinguer les zones sans donner nécessairement un ordre, l'ordre des zones traversées étant inversé par exemple dans la courbe de désorption par rapport à la courbe de sorption) zone A (respectivement A' pour la courbe de désorption) de faible pente, puis une deuxième zone B (respectivement B') de forte pente (comparativement notamment à la première zone) où la sorption augmente (respectivement la désorption s'opère) de façon importante, et une dernière zone C (respectivement C') de saturation de faible pente. Dans la première zone des isothermes du charbon actif selon l'invention, située dans la plage d'humidité relative allant de 0 à 30 ou 40%, la teneur en eau du charbon actif sélectionné reste inférieure à 5% en poids, et dans la deuxième zone (qu'il s'agisse de celle dans le cas de la sorption ou de celle dans le cas de la désorption, une hystérésis étant généralement observée entre les deux courbes), située à l'intérieur de la plage d'humidité relative allant de 30 ou 40% à 80%, la teneur en eau du charbon actif varie (à la hausse ou à la baisse selon la courbe considérée) entre 5% ou moins et au moins 30% en poids (bornes incluses), de préférence entre 5% ou moins et au moins 35% en poids (voire plus). Les isothermes sont déterminés par gravimétrie d'adsorption de vapeur d'eau (ou DVS ou Dynamic Vapour Sorption), en utilisant notamment un Analyseur de Sorption de Vapeur Dynamique de référence DVS Intrinsic de la société Surface Measurement System.

Avantageusement, le charbon actif utilisé présente également initialement (avant incorporation dans le mortier) une humidité relative inférieure ou égale à 2% en poids, cette humidité étant évaluée par pesées avant puis après séchage (le séchage étant effectué jusqu'à obtenir une variation de la masse inférieure à 0.1 %).

Le charbon actif utilisé est un charbon actif obtenu par broyage, et le cas échéant ré-agglomération, pour obtenir notamment des particules qui passent au tamis n°12 et sont retenues par le tamis n°40 des normes ASTM (ce qui correspond à une taille des particules entre 0.42 et 1.7 mm), puis séchage (notamment de sorte qu'il reste au maximum 2%, voire au maximum 1% d'humidité), le charbon étant activé de façon connue, en particulier en procédant par activation physique, notamment dans de la vapeur d'eau, l'activation s'opérant notamment à température élevée (en particulier entre 550 et 1100°C). Le charbon activé utilisé peut être activé en totalité ou seulement en surface, et est en particulier activé en totalité.

Un exemple de charbon actif particulièrement satisfaisant utilisé selon la présente invention est notamment le charbon actif vendu par la société Chemviron Carbon sous la référence "Filtrasorb 400", ce charbon étant un charbon actif granulaire issu de la houille et activé en totalité par activation physique, et présentant une granulométrie de 1,7 x 0,42 mm (c'est-à-dire passant au tamis n°12 qui correspond à une taille de particules de 1.7 mm, et retenue par le tamis n° 40 qui correspond à une taille des particules de 0.42 mm), une surface spécifique d'au moins 900-950 m²/g, un indice d'iode de l'ordre de 1000 mg/g, une capacité de sorption de 9.1 mg (toluène)/g, une masse volumique apparente d'au moins 440 à 540 kg/m³, une variation de masse moyenne Δ_{m(S)} en sorption de 3.55% et une variation de masse Δ_{m(D4)} après 4 cycles de sorption/désorption de 1.37%, des isothermes de sorption/désorption de type V illustrés en figure 3a, une porosité résultant d'un mélange de micropores et de mésopores et une humidité relative inférieure à 1 %.

Le taux du charbon actif défini dans la présente invention dans la composition de mortier ou enduit est de préférence compris entre 1 et 7% en poids de ladite composition (sèche ou en sec ou sous forme solide), de préférence d'au moins 2%, notamment de 2 à 5%, le taux de l'ordre de 3% étant particulièrement satisfaisant.

La composition de mortier ou d'enduit selon l'invention comprend également, comme défini précédemment, au moins un liant, en particulier minéral, et notamment à base de (ou formé de) au moins un liant hydraulique et de la chaux. Parmi les liants hydrauliques, on peut citer notamment les ciments Portland, les ciments alumineux, les ciments sulfoalumineux, les ciments bélitiques, les laitiers de haut fourneau et les ciments de mélanges pouzzolaniques comprenant éventuellement des cendres volantes, de la fumées de silice, du calcaire, du schiste calciné et/ou des pouzzolanes naturelles ou calcinées. Le cas échéant, le liant peut également inclure une source de sulfate de calcium (plâtre ou hémihydrate, gypse et/ou l'anhydrite), un liant phosphomagnésien, des dispersions de polymères ou des poudres redispersibles (par exemple des polymères ou co-polymères acryliques et/ou vinyliques, des copolymères de styrène et de butadiène, des copolymères de styrène et d'acide acrylique, des copolymères d'acétate de vinyle et d'éthylene, des copolymères d'acétate de vinyle et de versatate de vinyle, etc), le liant étant cependant majoritairement (à au moins 75% en poids du liant, et généralement à au moins 90% en poids du liant), voire uniquement formé d'un liant hydraulique de type ciment et de chaux.

La quantité de liant représente préférentiellement entre 10 et 35 % en poids de la composition de mortier ou d'enduit sèche.

La composition de mortier ou d'enduit selon l'invention contient également des granulats, agrégats, sables, et/ou fillers calcaires et/ou silicieux, présentant généralement et majoritairement (à au moins 75%, voire, 90%, voire 100% en poids) une taille de particules allant de 2 µm à 2 mm. Ces composés jouent notamment sur la rhéologie, la dureté ou l'aspect final du produit. Leur teneur est généralement comprise entre 55 et 80% poids par rapport à la masse totale de la composition (en sec).

La composition de mortier ou d'enduit peut également comprendre, outre la charbon actif précité, d'autres additifs tels que des agents rhéologiques ou plastifiants, des agents rétenteurs d'eau, des agents épaississants, des agents de protection biocides, des agents dispersants, des agents hydrofuges de masse, des pigments, des accélérateurs et/ou retardateurs, et d'autres agents permettant d'améliorer la prise, le durcissement et/ou la stabilité du mortier après application, d'ajuster la couleur, la maniabilité, la mise en oeuvre ou l'imperméabilité, par exemple des additifs de type ether de cellulose, ether d'amidon, tensioactif(s), etc. La teneur totale en ces additifs autres (que le charbon actif) varie entre 0% et 5%, en particulier entre 0 et 2% en poids, et notamment entre 0 et 1% en poids par rapport au mélange total des constituants de la composition de mortier ou d'enduit.

Le charbon actif utilisé selon l'invention permettant, en combinaison avec les autres composants de la composition, d'obtenir sans l'aide d'un autre agent, à la fois les propriétés recherchées en terme de purification de l'air ambiant et de régulation de l'humidité, contrairement aux formulations préexistantes dans les mortiers, la composition selon l'invention peut avantageusement être dénuée d'autres agents habituellement utilisés pour purifier l'air ou capter les molécules d'eau dans les enduits, notamment la composition peut être dénuée d'autres charbons actifs que le charbon actif sélectionné, ou d'additifs capteurs d'eau de type montmorillonite, etc.

La composition de mortier selon la présente invention peut se présenter sous forme pulvérulente (on parle alors de composition sèche) ou sous la forme d'une dispersion (on parle alors d'une composition de mortier en pâte). Comme indiqué précédemment, on parle également d'"enduit" dans la présente invention pour désigner le mortier, notamment lorsqu'il est sous sa forme durcie (notamment à température ambiante) après application sur une surface.

L'invention est plus particulièrement considérée en vue d'une utilisation comme revêtement intérieur d'une construction, pour sol, parois murales et/ou plafond par exemple, sans toutefois être limitée à cette utilisation, ce revêtement pouvant également être appliqué en extérieur. Son domaine d'application préféré est en intérieur, notamment pour une utilisation en sous-couche, par exemple et avantageusement d'au moins 0.5 cm, voire d'au moins 1 cm, d'épaisseur (couche épaisse), la présente composition étant également avantageuse à moindre épaisseur ou en couche finale.

La composition de mortier ou d'enduit selon l'invention montre à la fois une bonne sorption des COV (et ainsi des propriétés de purification de l'air ambiant), en particulier des COV apolaires (tels que toluène, xylène, éthylbenzène, décane, para-dichlorobenzène) en plus du formaldéhyde (ou d'autres aldéhydes), et des bonnes propriétés de régulation de l'humidité (et pas seulement de captage d'eau, mais aussi de relargage au besoin) répondant aux besoins des usagers en terme de confort, comme illustré ultérieurement, la composition absorbant l'humidité, la stockant puis, lorsque l'humidité de la pièce diminue de nouveau et/ou en cas de ventilation, re-libérant rapidement cette humidité stockée dans l'air ambiant.

La composition de mortier/le mortier selon l'invention peut absorber de grandes quantités de composés organiques volatils (COV) de l'air ambiant, les COV captés par le mortier ne subissant pas en outre de désorption à température ambiante. La composition de mortier selon l'invention a ainsi montré une efficacité (par polluant) en termes d'adsorption des COV de l'ordre d'au moins 60% pour au moins chacun des polluants suivants : éthylbenzene, xylène, toluène, dichlorobenzène, formaldéhyde, décane, et en particulier d'au moins 70% pour au moins chacun des polluants suivants : éthylbenzene, xylène, toluène, dichlorobenzène, décane. L'efficacité (en %) est mesurée à la sortie d'une chambre où est placé le matériau à tester, l'efficacité par polluant étant déterminée en faisant le rapport entre la différence de concentrations en ce polluant mesurées en sortie de chambre quand elle est vide et quand elle comprend ledit polluant, sur la concentration en ledit polluant en sortie de chambre quand elle est vide, l'air d'alimentation pour la mesure d'efficacité dans la présente invention comprenant les polluants suivants dans les concentrations indiquées (en µg/m³) : éthylbenzène : 16 µg/m³; xylène : 100 µg/m³ ; toluène : 100 µg/m³ ; para-dichlorobenzène : 65 µg/m³ ; formaldéhyde : 80 µg/m³; décane : 100 µg/m³.

Ladite composition/ledit mortier selon l'invention présente de surcroit une capacité de sorption de COV d'au moins 6 g par m² (d'échantillon testé). La capacité de sorption (en g/m²) du mortier est déterminée de façon suivante : le mortier est introduit dans une éprouvette en acier inoxydable, sur laquelle une cellule FLEC (Field and Laboratory Emission Cell) est placée. La cellule FLEC (Field and Laboratory Emission Cell) se présente sous la forme d'une cloche en acier inoxydable d'un diamètre interne de 15 cm et d'un volume de 35 ml qui se place sur le matériau à mesurer, l'ensemble, étanche à l'air ambiant, étant alimenté en air. La concentration en COV est mesurée au cours du temps par spectrométrie de masse SIFT-MS (Sélective Ion Flow Tube-Mass Spectrometry) à la sortie de la cellule FLEC. La concentration en COV est d'abord mesurée en sortie de cellule FLEC placée sur une éprouvette vide (sans échantillon) jusqu'à atteindre un palier qui correspond à la concentration initialement générée, afin de déterminer la courbe de mélange. La concentration en COV en sortie de la cellule FLEC placée sur le matériau à mesurer (ici le mortier, placé dans l'éprouvette) est ensuite mesurée au cours du temps. Un retard temporel est observé par rapport à la courbe de mélange pour ensuite atteindre l'état d'équilibre entre COV en phase gazeuse et COV adsorbé à la surface du matériau. Cet écart temporel correspond à une adsorption de COV par le matériau testé. Une intégration permet de calculer l'aire entre les deux courbes et de déterminer la quantité de COV adsorbée par le matériau à la concentration considérée. Dans les mesures effectuées pour déterminer la capacité de sorption du mortier dans la présente invention, l'air d'alimentation comprend les polluants suivants dans les concentrations indiquées (en ppb, parties par milliard) : 1,2,4-trimethylbenzène : 335 ppb; benzène : 230 ppb; styrène : 332 ppb; éthylbenzène : 208 ppb; m-xylène : 208 ppb; o-xylène : 206 ppb; p-xylène : 167 ppb; toluène : 498 ppb; 1,4-dichlorobenzène : 337 ppb; trichloroéthène : 331 ppb; tetrachloroéthène : 167 ppb; formaldéhyde : 100 ppb; butanone: 170 ppb; acétone : 160 ppb; éthanol : 165 ppb; acetaldéhyde : 163 ppb; R-(+)-limonène: 502 ppb; α-pinene : 498 ppb; n-décane : 503 ppb; octane :1.21 ppb. En sortie de la cellule FLEC le flux d'air présente un débit suffisant (de l'ordre de 500 ml/min) pour être échantillonné et analysé par le spectromètre SIFT-MS, la cellule FLEC étant considérée comme suffisamment étanche à l'air si les débits d'entrée et de sortie diffèrent de 5% au maximum.

La composition de mortier selon l'invention présente également avantageusement une valeur du tampon d'humidité MBV moyenne supérieure à 2 g par m² et par pourcentage de variation d'humidité relative (% ΔRH), et en particulier supérieure ou égale à 2.5 g/(m².%ΔRH), la valeur du tampon d'humidité (Moisture Buffer Value : MBV) traduisant la capacité à modérer les variations d'humidité relative de l'air avoisinant. La définition de cette valeur, ainsi qu'un protocole d'essai associé, ont été donnés à l'issue du NORDTEST project [Rode, C. (ed.), Moisture Buffering of Building Materials, Department of Civil Engineering, Technical University of Denmark, Report R-126, 2005- ISSN 1601-2917 ISBN 87-7877-195-1], cette valeur étant définie par le rapport de 1) la variation de masse au cours d'un cycle d'absorption / désorption (en g) sur 2) le produit de la valeur de la surface d'échange (en m²) et de la différence entre les valeurs d'humidités relatives (de l'air) haute et basse au cours du cycle (en %), l'humidité relative de l'air, ou degré hygrométrique, correspondant à la quantité de vapeur d'eau contenue dans un volume d'air donné par rapport au maximum qu'il pourrait contenir à une température et une pression données. Le principe du protocole d'essai associé est de soumettre les échantillons à des cycles d'humidités relatives journaliers afin d'être représentatifs des cycles rencontrés dans les bâtiments, le couple d'humidités relatives de référence étant 75 %/33 % d'humidités relatives avec une durée d'exposition de 8 heures en absorption et de 16 heures en désorption, le suivi massique des échantillons permettant alors de déterminer la valeur MBV, les performances étant d'autant meilleures que cette valeur est haute.

Le charbon actif sélectionné joue ainsi à la fois le rôle d'agent dépolluant et de régulateur de l'humidité. La composition selon l'invention, une fois sèche (notamment une fois appliquée en revêtement et séchée) présente également une bonne dureté et une bonne résistance à l'abrasion.

La présente invention porte également sur un procédé de préparation de la composition de mortier (notamment sèche ou en pâte) décrite ci-dessus, dans lequel le charbon actif tel que sélectionné est directement mélangé avec le liant, les granulats, agrégats, sables et/ou fillers et éventuels autres additifs lors de la préparation de la composition de mortier, ou, le cas échéant, est ajouté directement dans une composition de mortier déjà préparée comprenant au moins un liant, au moins des granulats, agrégats, sables et/ou fillers et des éventuels additifs. L'ajout peut aussi être réalisé au moment du gâchage de la composition de mortier avec de l'eau. Le charbon actif incorporé est compatible avec les autres composants du mortier et ne nuit pas aux autres propriétés recherchées du mortier.

La présente invention porte aussi sur un enduit ou revêtement d'intérieur pour sols, parois murales et/ou plafonds obtenu à partir d'une composition de mortier sèche gâchée avec de l'eau ou de mortier en pâte, la composition étant appliquée puis durcie (notamment par séchage à l'air ambiant. Ce revêtement permet de dépolluer une pièce dans laquelle il est déposé et d'en réguler l'humidité et est compatible avec l'utilisation comme revêtement d'intérieur. L'invention porte également sur l'utilisation d'un tel revêtement pour réduire la quantité de COV et réguler l'humidité dans l'air intérieur d'un bâtiment. Outre l'utilisation possible comme mono-couche ou comme couche de finition, ce revêtement est particulièrement approprié pour servir de sous-couche, en particulier de couche ou sous-couche épaisse, c'est-à-dire d'au moins 0.5 cm, voire d'au moins 1 cm, d'épaisseur, notamment d'épaisseur comprise entre 0.5 cm, ou 1 cm, et 4 cm. L'utilisation en tant que sous-couche, en particulier en tant que sous couche épaisse, revêtue d'une couche de finition (pour aplanir et donner une couleur définitive), n'empêche pas la réduction des COV ni la régulation de l'humidité, en particulier dans le cas où ladite couche de finition présente de préférence une épaisseur n'excédant pas 5 mm et/ou une perméabilité à la vapeur d'eau supérieure à 300 g/m²/jour (mesurée notamment selon la norme NF 7783-2) et/ou, dans le cas d'une couche de finition incluant au moins des pigments et /un liant (telle qu'une couche de peinture), un rapport entre le taux de pigments et de liant(s) supérieur à 4. Le revêtement selon l'invention est également exempt d'odeur(s) désagréable(s) et présente une bonne tenue au vieillissement.

Les exemples ci-après permettent d'illustrer l'invention sans en limiter la portée, en liaison avec les figures dans lesquelles :
- la figure 1 représente un exemple de profil de variation de masse d'un composé au cours de phases de sorption et de désorption permettant d'évaluer les variations de masse moyenne Δ_{m(S)} en sorption et Δ_{m(D4)} après 4 cycles de sorption/désorption selon le protocole de mesure décrit plus avant.

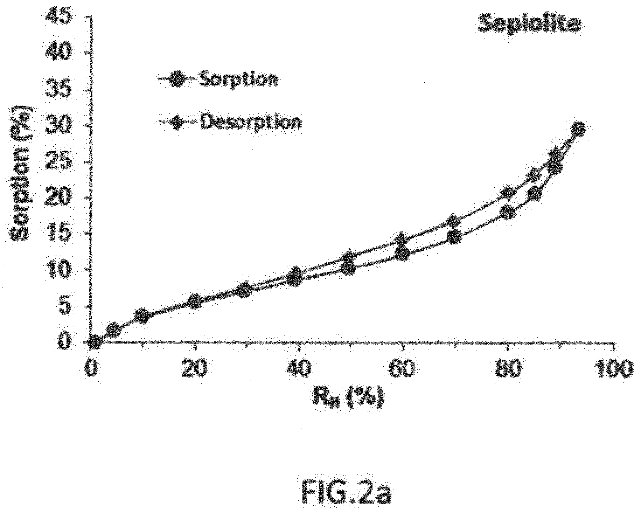

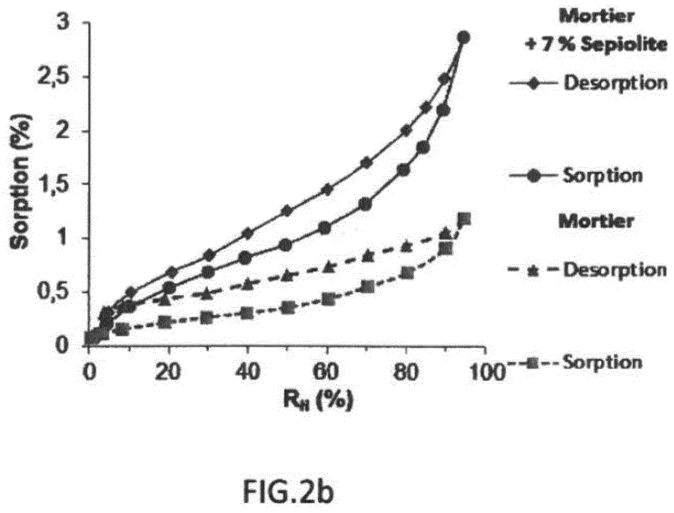

- la figure 2a représente, à titre de comparaison avec l'additif sélectionné selon l'invention, les isothermes de sorption et de désorption de vapeur d'eau (représentant la teneur en eau en pourcentage en poids Wₜ en fonction de l'humidité relative R_{H} en %), d'un absorbant en poudre à base de sépiolite (argile à structure fibreuse) commercialisé par la société Toisa sous la référence Toisa sépiolite 15/30 et utilisé dans les mortiers comme agent dépolluant, la figure 2b représentant les isothermes de sorption et de désorption d'une composition de mortier incorporant cet agent dépolluant comparativement aux isothermes de sorption/désorption de la composition de mortier sans ledit agent.

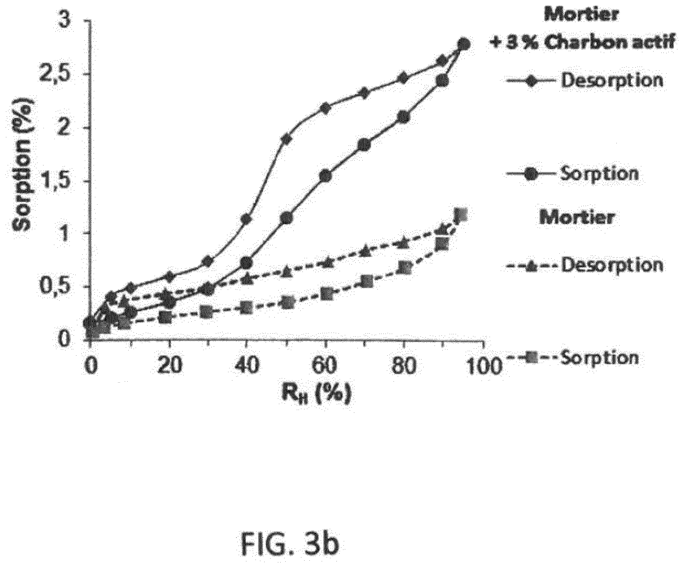

- la figure 3a représente les isothermes de sorption et de désorption d'un charbon actif particulier, sélectionné selon l'invention, et commercialisé par la société Chemviron sous la référence "Filtrasorb 400", la figure 3b représentant les isothermes de sorption et de désorption d'une composition de mortier incorporant ce charbon actif comparativement aux isothermes de sorption/désorption de la composition de mortier sans ledit charbon actif.

La figure 1 montre un exemple de profil de variation de la masse d'un composé (représentation à titre illustratif ne correspondant pas nécessairement à un composé particulier) au cours du temps en effectuant 4 cycles de sorption et de désorption et une cinquième phase de sorption à la fin des 4 cycles selon le protocole de mesure des paramètres Δ_{m(S)} et Δ_{m(D4)} décrit plus avant. La masse du composé (pur) analysé est mesurée à la fin de chaque phase de sorption et de chaque phase de désorption de façon à tracer des profils de variation de masse au cours du temps. La variation de masse moyenne Δₘ au cours des phases de sorption correspond à la moyenne arithmétique des variations de masses Δ₁ à Δ₅ mesurées pour chacune des phases de sorption (moyenne de 5 valeurs) et la variation de masse Δ_{m(D4)} est la valeur de la dernière variation de masse en désorption à la fin de la phase de désorption du 4ème cycle de sorption/désorption.

Dans les exemples suivants, on a utilisé comme base de composition de mortier, une composition de mortier commercialisée sous la référence Weber cal 174 par la société Saint-Gobain Weber, cette composition étant à base de ciment blanc Portland et de chaux hydratée, à un taux en poids entre 15 et 22%, de sables et fillers calcaires de diamètre de moins de 1.5 mm, à un taux en poids entre 75 et 86 %, et d'additifs (de type ether de cellulose, ether d'amidon et tensioactif(s)) à un taux inférieur à 0.5%.

Les échantillons pour les tests effectués sur la composition de mortier incorporant le cas échéant l'un ou l'autre des additifs testés, ont été préparés comme suit :
A partir de la composition de mortier en poudre précédente, à laquelle on ajoute le cas échéant selon les essais effectués l'un ou l'autre des additifs cités par la suite, on ajoute de l'eau, à raison de 10 g d'eau pour 3 g de mortier en poudre, et on mélange l'ensemble 2 fois 30 secondes à l'aide d'un mixeur planétaire pour mortier de référence Rayneri. Le mortier est ensuite versé dans des moules de 10 x 10 x 2 cm³ puis est démoulé le jour suivant puis séché pendant 28 jours à une température de 20°C et un taux d'humidité relative de 65%.

On a comparé les isothermes de sorption et de désorption obtenus en utilisant un absorbant en poudre à base de sépiolite commercialisé par la société Toisa sous la référence Toisa sépiolite 15/30 et utilisé dans les mortiers comme agent dépolluant (exemple comparatif) avec celles obtenues en utilisant un charbon actif commercialisé par la société Chemviron sous la référence "Filtrasorb 400", ce charbon étant un charbon actif granulaire issu de la houille et activé en totalité par activation physique, et présentant une granulométrie de 1,7 x 0,42 mm, une surface spécifique de l'ordre de 950 m²/g, un indice d'iode de l'ordre de 1000 mg/g, une capacité de sorption de 9.1 mg (toluène)/g, une masse volumique apparente d'au moins 440 à 540 kg/m³, une variation de masse moyenne Δₘ de 3.55% en sorption et une variation de masse Δ_{m(D4)} après 4 cycles de sorption/désorption de 1.37%, des isothermes de sorption/désorption de type V illustrés en figure 3a, une porosité avec notamment un mélange de micropores et de mésopores, et une humidité relative inférieure à 1%.

Les isothermes de sorption/désorption pour les additifs précités seuls sont donnés respectivement en figure 2a pour l'absorbant Sepiolite et en figure 3a pour le charbon actif précité, et les isothermes de sorption/désorption pour les additifs ajoutés à la composition de mortier précitée (à un taux respectif, pour lequel un résultat optimal a été observé, évalué à 7% en poids de la composition finale de mortier (en sec) pour l'additif Sepiolite et à 3% en poids de la composition finale pour le charbon actif Filtrasorb 400), sont donnés respectivement en figure 2b pour le mortier incorporant l'absorbant Sepiolite et en figure 3b pour le mortier incorporant le charbon actif précité, ces derniers isothermes étant comparées aux isothermes obtenues pour la composition de mortier sans lesdits additifs et représentées sur les mêmes figues 2b et 3b, les isothermes représentés sur les figures 2b et 3b étant celles déterminées au cours d'un deuxième cycle de mesures en raison d'un hystérésis toujours important des compositions cimentaires observé lors d'un premier cycle de sorption/désorption desdites compositions. Les isothermes sont déterminées en utilisant un Analyseur de Sorption de Vapeur Dynamique de référence DVS Intrinsic de la société Surface Measurement System.

On observe que les isothermes de sorption/désorption pour l'additif Sepiolite seul (figure 2a) sont de type II (sur le modèle des représentations données notamment dans la nomenclature de l'UICPA, avec une sorption et désorption s'opérant très progressivement et sans grande variation entre le taux d'humidité relative le plus bas et celui le plus haut, la teneur en eau de l'additif n'excédant pas 20% dans la plage d'humidité relative allant de 40 à 80%.

On observe également que les isothermes de sorption/désorption pour la composition de mortier Weber cal 174 seule (figure 2b) sont déjà aussi de type Il avec une teneur en eau captée par la composition n'excédant pas 0.8% dans la plage d'humidité relative allant de 40 à 80%.

La combinaison de l'additif Sepiolite et de la composition de mortier Weber cal 174 donne également (figure 2b) des isothermes de même type que précédemment, avec une sorption et désorption s'opérant très progressivement et sans grande variation entre le taux d'humidité relative le plus bas et celui le plus haut. Même si la sorption du mélange incorporant l'additif comparatif Sepiolite est meilleure que celle de la composition de mortier sans additif, le captage et relargage de l'eau s'opèrent de façon trop modérée et progressive dans la zone d'humidité relative allant de 40 à 80% pour permettre une régulation (notamment une désorption) réellement efficace.

Pour le charbon actif Filtrasorb 400 en revanche, on observe sur l'additif seul une forte régulation dans une zone à l'intérieur de la zone d'humidité relative allant de 40 à 80% (figure 3b). Les isothermes de sorption et de désorption du charbon actif seul sont de forme sigmoïde, en particulier de type V, et présentent une première zone A de sorption, respectivement A' de désorption, faible, avec une faible pente, la teneur en eau du charbon actif restant inférieure à 5% en poids jusqu'à au moins 40% d'humidité relative de l'air ambiant, et, dans la plage allant de 40 à 80% d'humidité relative de l'air ambiant, une deuxième zone de sorption B, respectivement de désorption B', forte, de forte pente (comparativement notamment à la première zone) où la sorption augmente (respectivement la désorption s'opère) de façon importante, la teneur en eau du charbon actif variant (à la hausse ou à la baisse selon la courbe considérée) entre 5% ou moins et jusqu'à 35% en poids, et enfin une dernière zone C, respectivement C', de saturation de faible pente.

Pour le mélange de ce charbon actif et de la composition de mortier précitée, on obtient alors une zone de sorption, respectivement de désorption, forte, de forte pente où la sorption augmente (respectivement la désorption s'opère) de façon importante dans une zone située dans la plage allant de 40 à 80% d'humidité relative de l'air ambiant, permettant une régulation efficace de l'humidité dans la zone d'humidité relative la plus importante à réguler.

Les valeurs du tampon d'humidité (MBV) ont également été comparées pour chacun des mélanges précédents et pour la composition de mortier seule. Les valeurs relevées pour chacun des échantillons (de dimensions 10 X 10 X 2 cm³) testés étaient de 1.1 (g/(m².%ΔRH)) (valeur considérée comme plutôt médiocre) pour la composition de mortier seule, 2 pour la composition avec l'additif Sepiolite (valeur moyenne), et d'au moins 2.6 (valeur considérée comme bonne) pour la composition selon l'invention avec le charbon actif Filtrasorb 400.

Parallèlement, les propriétés de sorption de COV, en particulier du toluène, du xylène, de l'éthylbenzène, du décane, du dichlorobenzène, et du formaldéhyde, ont été comparées en utilisant chacun des deux additifs précédents incorporés à la même composition de mortier que précédemment. Les performances d'élimination de polluants (COV/formaldéhyde) contenus dans une phase gazeuse ont été mesurées et comparées avec la composition de mortier/d'enduit seule. La chambre de test dans laquelle les échantillons à tester ont été placés était une chambre de référence CLIMPAQ de 50 litres commercialisée par la société Climtech. Les différents échantillons ont été testés suivant la méthode décrite dans la norme ISO 16000-23/24, mais en changeant l'air d'alimentation pour avoir le mélange indiqué précédemment pour la mesure d"efficacité, et en analysant les résultats 24h après.

A l'issue des tests, on a observé :
- pour l'échantillon de mortier contenant l'agent Sepiolite :
   - une sorption du toluène de 0%
   - une sorption du xylène de 0%
   - une sorption de l'éthylbenzène de 0%
   - une sorption du décane de 0%
   - une sorption du dichlorobenzène de 40%
   - une sorption du formaldéhyde de 61%.
- pour l'échantillon de mortier contenant le charbon actif sélectionné selon l'invention :
   - une sorption du toluène de 80%
   - une sorption du xylène de 78%
   - une sorption de l'éthylbenzène de 80%
   - une sorption du décane de 78%
   - une sorption du dichlorobenzène de 85%
   - une sorption du formaldéhyde de 63%.

En outre, l'échantillon de mortier contenant le charbon actif sélectionné selon l'invention n'a montré aucune désorption des COV après leur sorption. A titre de comparaison, on a également testé un autre charbon actif obtenu à partir de coques de noix de coco et commercialisé sous la référence SIL 15 par la société Silcarbon et présentant notamment un nombre d'iode de 850 mg/g, ce charbon ayant permis une bonne sorption des COV mais ayant par contre rejeté par la suite ces COV dans l'atmosphère à température ambiante.

On a également noté que la couleur restait stable et l'odeur n'était pas altérée pour la composition de mortier incorporant le charbon actif sélectionné selon l'invention.

La composition de mortier ou enduit selon l'invention peut être utilisée notamment comme revêtement intérieur d'une construction, pour sol, parois murales et/ou plafond, etc.

## Revendications

1. Composition de mortier ou enduit pour revêtement d'intérieur, cette composition comprenant au moins un liant, en particulier minéral, et comprenant également généralement au moins des granulats ou agrégats ou sables ou fillers, ladite composition étant **caractérisée en ce qu'**elle comprend en outre entre 1 et 10% en poids de ladite composition en sec d'au moins un charbon actif, préférentiellement sous forme granulaire, présentant :
- une surface spécifique supérieure ou égale à 875 m²/g et inférieure ou égale à 1200 m²/g et/ou un indice d'iode supérieur ou égal à 900 mg/g et/ou une capacité de sorption d'au moins 7 mg de toluène par g de charbon actif, et
- une variation de masse moyenne Δ_{m(S)} en sorption d'au moins 2% et une variation de masse Δ_{m(D4)} après 4 cycles de sorption/désorption d'au plus 1.5%.

2. Composition selon la revendication 1 **caractérisée en ce que** ledit charbon actif est formé de particules de formes irrégulières dans une gamme de taille de l'ordre de 0.2 mm à 5 mm, les particules dudit charbon actif étant en particulier à au moins 90% en poids de taille comprise entre 0.2 mm et 5 mm, et, de façon préférée, étant à au moins 90% en poids de taille comprise entre 0.2 et 2 mm.

3. Composition selon l'une des revendications précédentes **caractérisée en ce que** la masse volumique dudit charbon actif est supérieure ou égale à 400 kg/m³, de préférence supérieure ou égale à 440 kg/m³, voire supérieure ou égale à 500 kg/m³.

4. Composition selon l'une des revendications précédentes **caractérisée en ce que** ledit charbon actif présente une surface spécifique supérieure ou égale à 900 m²/g, en particulier supérieure à 900 m²/g, notamment supérieure ou égale à 950 m²/g, voire supérieure ou égale à 1000 m²/g, et est de préférence inférieure à 1200 m²/g, en particulier inférieure ou égale à 1100 m²/g, ou **caractérisée en ce que** ledit charbon actif présente un indice d'iode supérieur ou égal à 1000 mg/g, ou **caractérisée en ce que** ledit charbon actif présente une capacité de sorption d'au moins 8 mg de toluène par g de charbon actif, en particulier d'au moins 9 mg de toluène par g de charbon actif.

5. Composition selon l'une des revendications précédentes **caractérisée en ce que** ledit charbon actif comprend à la fois des micropores et des mésopores.

6. Composition selon l'une des revendications précédentes **caractérisée en ce que** ledit charbon actif est un charbon actif issu de la houille.

7. Composition selon l'une des revendications précédentes **caractérisée en ce que** ledit charbon actif présente une variation de masse moyenne Δ_{m(S)} en sorption d'au moins 2.5%, voire d'au moins 3%, et une variation de masse Δ_{m(D4)} après 4 cycles de sorption/désorption d'au plus 1.4%.

8. Composition selon l'une des revendications précédentes **caractérisée en ce que** ledit charbon actif présente des isothermes de sorption et de désorption de forme sigmoïde présentant une première zone de sorption, respectivement de désorption, avec une teneur en eau dudit charbon actif inférieure à 5% en poids jusqu'à au moins 30 ou au moins 40% d'humidité relative de l'air ambiant, et une deuxième zone de sorption, respectivement de désorption, forte comparativement à la première zone, avec une variation de la teneur en eau du charbon allant de 5%, ou moins, en poids à au moins 30% en poids, se situant à l'intérieur de la plage allant de 30 ou 40% à 80% d'humidité relative de l'air ambiant.

9. Composition selon l'une des revendications précédentes **caractérisée en ce que** ledit charbon actif présente un isotherme de sorption, respectivement de désorption, préférentiellement de type V, intégrant une première zone située dans la plage d'humidité relative allant de 0 à au moins 30 % ou au moins 40% et dans laquelle la teneur en eau dudit charbon actif reste inférieure à 5% en poids, puis une deuxième zone située à l'intérieur de la plage d'humidité relative allant de 30 ou 40 à 80% et dans laquelle la teneur en eau dudit charbon actif varie entre 5% ou moins et au moins 30% en poids, de préférence entre 5 ou moins et au moins 35% en poids.

10. Composition selon l'une des revendications précédentes **caractérisée en ce que** ledit charbon actif présente initialement une humidité relative inférieure ou égale à 2% en poids.

11. Composition selon l'une des revendications précédentes **caractérisée en ce que** le taux dudit charbon actif dans ladite composition de mortier ou enduit est compris entre 1 et 7% en poids de ladite composition en sec, de préférence d'au moins 2%, notamment de 2 à 5%.

12. Composition selon l'une des revendications précédentes **caractérisée en ce que** le liant est formé ou constitué d'un mélange de ciment(s) et de chaux.

13. Composition selon l'une des revendications précédentes **caractérisée en ce que** ladite composition est dénuée d'autres charbons actifs que ledit charbon actif ou d'autres additifs capteurs d'eau de type montmorillonite.

14. Composition selon l'une des revendications précédentes **caractérisée en ce qu'**elle présente une efficacité en termes d'absorption des composants organiques volatils de l'ordre d'au moins 60% pour au moins chacun des polluants suivants : éthylbenzene, xylène, toluène, dichlorobenzène, formaldéhyde, décane, et en particulier d'au moins 70% pour au moins chacun des polluants suivants : éthylbenzene, xylène, toluène, dichlorobenzène, décane, ou présente une capacité de sorption des composants organiques volatils d'au moins 6 g/m² ou présente une valeur du tampon d'humidité MBV moyenne supérieure à 2 g/(m².%ARH), et en particulier supérieure ou égale à 2.5 g/(m².%ΔRH).

15. Procédé de préparation de la composition de mortier ou d'enduit selon l'une des revendications précédentes **caractérisé en ce que** ledit charbon actif est directement mélangé avec le liant, les granulats, agrégats, sables ou fillers et autres éventuels additifs, ou est ajouté directement dans une composition de mortier déjà préparée comprenant au moins un liant, au moins des granulats, agrégats, sables ou fillers et des éventuels additifs, ou est ajouté au moment du gâchage de la composition de mortier avec de l'eau.

16. Revêtement d'intérieur pour sols, parois murales et/ou plafonds obtenu à partir d'une composition de mortier selon l'une des revendications 1 à 14.

17. Revêtement selon la revendication 16 **caractérisé en ce que** ladite composition de mortier forme une sous-couche, en particulier une sous-couche d'au moins 0.5 cm, voire d'au moins 1 cm, d'épaisseur.

18. Revêtement selon l'une des revendications 16 ou 17 **caractérisé en ce que** ladite sous-couche est revêtue d'une couche de finition présentant une épaisseur n'excédant pas 5 mm ou une perméabilité à la vapeur d'eau supérieure à 300 g/m²/jour ou, dans le cas d'une couche de finition incluant au moins des pigments et /un liant, un rapport entre le taux de pigments et de liant(s) supérieur à 4.

## Patentansprüche

1. Mörtel- oder Putzzusammensetzung für Innenverkleidungen, wobei diese Zusammensetzung mindestens ein Bindemittel, insbesondere ein mineralisches Bindemittel, umfasst und im Allgemeinen auch mindestens Zuschlagstoffe oder Aggregate oder Sande oder Filler umfasst, wobei die Zusammensetzung **dadurch gekennzeichnet ist, dass** sie außerdem zwischen 1 und 10 Gew.-% der Zusammensetzung in Trockenform mindestens eine Aktivkohle, vorzugsweise in granulierter Form, umfasst, die Folgendes aufweist:
- eine spezifische Oberfläche von größer oder gleich 875 m²/g und kleiner oder gleich 1200 m²/g und/oder eine Jodzahl von größer oder gleich 900 mg/g und/oder eine Sorptionskapazität von mindestens 7 mg Toluol pro g Aktivkohle, und
- eine mittlere Massenänderung Δₘ₍ₛ₎ bei der Sorption von mindestens 2 % und eine Massenänderung Δ_{m(D4)} nach 4 Sorptions-ZDesorptionszyklen von höchstens 1,5 %.

2. Zusammensetzung nach Anspruch 1, **dadurch gekennzeichnet, dass** die Aktivkohle aus unregelmäßig geformten Partikeln in einem Größenbereich von 0,2 mm bis 5 mm gebildet ist, wobei die Partikel der Aktivkohle insbesondere zu mindestens 90 Gew.-% eine Größe zwischen 0,2 mm und 5 mm aufweisen und vorzugsweise zu mindestens 90 Gew.-% eine Größe zwischen 0,2 mm und 2 mm aufweisen.

3. Zusammensetzung nach einem der vorhergehenden Ansprüche, **dadurch gekennzeichnet, dass** die Dichte der Aktivkohle größer oder gleich 400 kg/m³, vorzugsweise größer oder gleich 440 kg/m³, oder sogar größer oder gleich 500 kg/m³ ist.

4. Zusammensetzung nach einem der vorhergehenden Ansprüche, **dadurch gekennzeichnet, dass** die Aktivkohle eine spezifische Oberfläche von größer oder gleich 900 m²/g, insbesondere größer als 900 m²/g, insbesondere größer oder gleich 950 m²/g, sogar größer oder gleich 1000 m²/g, aufweist und vorzugsweise kleiner als 1200 m²/g ist, insbesondere kleiner oder gleich 1100 m²/g, oder **dadurch gekennzeichnet, dass** die Aktivkohle eine Jodzahl von größer oder gleich 1000 mg/g aufweist, oder **dadurch gekennzeichnet, dass** die Aktivkohle eine Sorptionskapazität von mindestens 8 mg Toluol pro g Aktivkohle, insbesondere von mindestens 9 mg Toluol pro g Aktivkohle, aufweist.

5. Zusammensetzung nach einem der vorhergehenden Ansprüche, **dadurch gekennzeichnet, dass** die Aktivkohle sowohl Mikroporen als auch Mesoporen umfasst.

6. Zusammensetzung nach einem der vorhergehenden Ansprüche, **dadurch gekennzeichnet, dass** die Aktivkohle eine aus Steinkohle gewonnene Aktivkohle ist.

7. Zusammensetzung nach einem der vorhergehenden Ansprüche, **dadurch gekennzeichnet, dass** die Aktivkohle eine mittlere Massenänderung Δₘ₍ₛ₎ bei der Sorption von mindestens 2,5 %, sogar mindestens 3 %, und eine Massenänderung Δ_{m(D4)} nach 4 Sorptions-/Desorptionszyklen von höchstens 1,4 % aufweist.

8. Zusammensetzung nach einem der vorhergehenden Ansprüche, **dadurch gekennzeichnet, dass** die Aktivkohle sigmoidförmige Sorptions- und Desorptionsisothermen aufweist, die eine erste Sorptions- bzw. Desorptionszone mit einem Wassergehalt der Aktivkohle von weniger als 5 Gew.-% bis zu mindestens 30 oder mindestens 40 % relativer Luftfeuchtigkeit der Umgebung aufweisen, und eine zweite, im Vergleich zur ersten Zone starke Sorptions- bzw. Desorptionszone mit einer Variation des Wassergehalts der Kohle von 5 Gew.-% oder weniger bis mindestens 30 Gew.-%, die innerhalb des Bereichs von 30 oder 40 % bis 80 % relativer Luftfeuchtigkeit der Umgebung liegt.

9. Zusammensetzung nach einem der vorhergehenden Ansprüche, **dadurch gekennzeichnet, dass** die Aktivkohle eine Sorptions- bzw. Desorptionsisotherme, vorzugsweise vom Typ V, aufweist, die eine erste Zone integriert, die sich im Bereich der relativen Feuchtigkeit von 0 bis mindestens 30 % oder mindestens 40 % befindet und in dem der Wassergehalt der Aktivkohle unter 5 Gew.-% bleibt, und dann eine zweite Zone, die sich innerhalb des Bereichs der relativen Feuchtigkeit von 30 oder 40 bis 80 % befindet und in der der Wassergehalt der Aktivkohle zwischen 5 Gew.-% oder weniger und mindestens 30 Gew.-%, vorzugsweise zwischen 5 Gew.-% oder weniger und mindestens 35 Gew.-%, schwankt.

10. Zusammensetzung nach einem der vorhergehenden Ansprüche, **dadurch gekennzeichnet, dass** die Aktivkohle anfänglich eine relative Feuchtigkeit von weniger als oder gleich 2 Gew.-% aufweist.

11. Zusammensetzung nach einem der vorhergehenden Ansprüche, **dadurch gekennzeichnet, dass** der Anteil der Aktivkohle in der Mörtel- oder Putzzusammensetzung zwischen 1 und 7 Gew.-% der Zusammensetzung in trockener Form, vorzugsweise mindestens 2 %, insbesondere 2 bis 5 %, beträgt.

12. Zusammensetzung nach einem der vorhergehenden Ansprüche, **dadurch gekennzeichnet, dass** das Bindemittel aus einer Mischung aus Zement(en) und Kalk gebildet wird oder besteht.

13. Zusammensetzung nach einem der vorhergehenden Ansprüche, **dadurch gekennzeichnet, dass** die Zusammensetzung frei von anderen Aktivkohlen als der Aktivkohle oder anderen wasseraufnehmenden Zusatzstoffen vom Montmorillonit-Typ ist.

14. Zusammensetzung nach einem der vorhergehenden Ansprüche, **dadurch gekennzeichnet, dass** sie eine Effizienz in Bezug auf die Absorption flüchtiger organischer Komponenten in der Größenordnung von mindestens 60 % für mindestens jeden der folgenden Schadstoffe: Ethylbenzol, Xylol, Toluol, Dichlorbenzol, Formaldehyd, Dekan und insbesondere mindestens 70 % für mindestens jeden der folgenden Schadstoffe aufweist: Ethylbenzol, Xylol, Toluol, Dichlorbenzol, Dekan, oder eine Sorptionskapazität für flüchtige organische Komponenten von mindestens 6 g/m² aufweist oder einen durchschnittlichen MBV-Feuchtigkeitspufferwert von mehr als 2 g/(m².% ΔRH), und insbesondere größer oder gleich 2.5 g/(m².% ΔRH) aufweist.

15. Verfahren zur Herstellung der Mörtel- oder Putzzusammensetzung nach einem der vorhergehenden Ansprüche, **dadurch gekennzeichnet, dass** die Aktivkohle direkt mit dem Bindemittel, den Zuschlagstoffen, Aggregaten, Sanden oder Füllstoffen und anderen möglichen Zusatzstoffen gemischt wird, oder direkt in eine bereits hergestellte Mörtelzusammensetzung gegeben wird, die mindestens ein Bindemittel, mindestens Zuschlagstoffe, Aggregate, Sande oder Füllstoffe und mögliche Zusatzstoffe umfasst, oder zum Zeitpunkt des Anrührens der Mörtelzusammensetzung mit Wasser zugegeben wird.

16. Innenverkleidung für Böden, Wand- und/oder Deckenflächen, die aus einer Mörtelzusammensetzung nach einem der Ansprüche 1 bis 14 erhalten wird.

17. Beschichtung nach Anspruch 16, **dadurch gekennzeichnet, dass** die Mörtelzusammensetzung eine Unterschicht, insbesondere eine Unterschicht mit einer Dicke von mindestens 0,5 cm oder sogar mindestens 1 cm, bildet.

18. Beschichtung nach einem der Ansprüche 16 oder 17,
**dadurch gekennzeichnet, dass** die Unterschicht mit einer Deckschicht beschichtet ist, die eine Dicke von nicht mehr als 5 mm oder eine Wasserdampfdurchlässigkeit von mehr als 300 g/m²/Tag aufweist oder im Fall einer Deckschicht, die mindestens Pigmente und /ein Bindemittel enthält, ein Verhältnis zwischen dem Anteil an Pigmenten und Bindemittel(n) von mehr als 4 aufweist.

## Claims

1. A mortar or plaster composition for interior covering, said composition comprising at least one binder, in particular mineral, and also generally comprising at least granules or aggregates or sands or fillers, said composition being **characterized in that** it further comprises between 1 and 10 wt% of said composition when dry of at least one activated carbon, preferably in the form of granules, having:
- a specific surface area greater than or equal to 875 m²/g and less than or equal to 1200 m²/g and/or an iodine number greater than or equal to 900 mg/g and/or a sorption capacity of at least 7 mg of toluene per g of activated carbon, and
- an average weight change Δ_{m(S)} in sorption of at least 2% and a weight change Δ_{m(D4)} after 4 cycles of sorption/desorption of at most 1.5%.

2. The composition as claimed in claim 1, **characterized in that** said activated carbon is formed from particles with irregular shapes in a size range of the order of 0.2 mm to 5 mm, the particles of said activated carbon being in particular to at least 90 wt% with a size between 0.2 mm and 5 mm, and preferably being to at least 90 wt% with a size between 0.2 and 2 mm.

3. The composition as claimed in one of the preceding claims, **characterized in that** the density of said activated carbon is greater than or equal to 400 kg/m³, preferably greater than or equal to 440 kg/m³, or even greater than or equal to 500 kg/m³.

4. The composition as claimed in one of the preceding claims, **characterized in that** said activated carbon has a specific surface area greater than or equal to 900 m²/g, in particular greater than 900 m²/g, notably greater than or equal to 950 m²/g, or even greater than or equal to 1000 m²/g, and is preferably less than 1200 m²/g, in particular less than or equal to 1100 m²/g, or **characterized in that** said activated carbon has an iodine number greater than or equal to 1000 mg/g, or **characterized in that** said activated carbon has a sorption capacity of at least 8 mg of toluene per g of activated carbon, in particular at least 9 mg of toluene per g of activated carbon.

5. The composition as claimed in one of the preceding claims, **characterized in that** said activated carbon comprises both micropores and mesopores.

6. The composition as claimed in one of the preceding claims, **characterized in that** said activated carbon is an activated carbon derived from coal.

7. The composition as claimed in one of the preceding claims, **characterized in that** said activated carbon has an average weight change Δ_{m(S)} in sorption of at least 2.5%, or even of at least 3%, and a weight change Δ_{m(D4)} after 4 cycles of sorption/desorption of at most 1.4%.

8. The composition as claimed in one of the preceding claims, **characterized in that** said activated carbon has sorption and desorption isotherms of a sigmoid shape having a first zone of sorption, or desorption, with a water content of said activated carbon below 5 wt% up to at least 30 or at least 40% relative humidity of the ambient air, and a second zone of strong sorption, or desorption, compared to the first zone, with a change in water content of the carbon from 5 wt%, or less, to at least 30 wt%, within the range from 30 or 40% to 80% relative humidity of the ambient air.

9. The composition as claimed in one of the preceding claims, **characterized in that** said activated carbon has a sorption, or desorption, isotherm preferably of type V, integrating a first zone located in the range of relative humidity from 0 to at least 30% or at least 40% and in which the water content of said activated carbon remains below 5 wt%, and then a second zone located within the range of relative humidity from 30 or 40 to 80% and in which the water content of said activated carbon varies between 5 wt% or less and at least 30 wt%, preferably between 5 or less and at least 35 wt%.

10. The composition as claimed in one of the preceding claims, **characterized in that** said activated carbon initially has a relative humidity less than or equal to 2 wt%.

11. The composition as claimed in one of the preceding claims, **characterized in that** the proportion of said activated carbon in said mortar or plaster composition is between 1 and 7 wt% of said composition when dry, preferably at least 2%, in particular from 2 to 5%.

12. The composition as claimed in one of the preceding claims, **characterized in that** the binder is formed or consists of a mixture of cement(s) and lime.

13. The composition as claimed in one of the preceding claims, **characterized in that** said composition is devoid of other activated carbons than said activated carbon or of other water capturing additives of the montmorillonite type.

14. The composition as claimed in one of the preceding claims, **characterized in that** it has an efficacy in terms of absorption of volatile organic compounds of the order of at least 60% for at least each of the following pollutants: ethylbenzene, xylene, toluene, dichlorobenzene, formaldehyde, decane, and in particular of at least 70% for at least each of the following pollutants: ethylbenzene, xylene, toluene, dichlorobenzene, decane, or has a sorption capacity for volatile organic compounds of at least 6 g/m² or has an average moisture buffer value MBV above 2 g/(m².%ΔRH), and in particular greater than or equal to 2.5 g/(m².%ΔRH).

15. A method for preparing the mortar or plaster composition as claimed in one of the preceding claims, **characterized in that** said activated carbon is mixed directly with the binder, the granules, aggregates, sands or fillers and other optional additives, or is added directly to a mortar composition already prepared comprising at least one binder, at least granules, aggregates, sands or fillers and optional additives, or is added at the moment of mixing the mortar composition with water.

16. An interior covering for floors, interior walls and/or ceilings obtained from a mortar composition as claimed in one of claims 1 to 14.

17. The covering as claimed in claim 16, **characterized in that** said mortar composition forms a sub-layer, in particular a sub-layer of at least 0.5 cm, or even of at least 1 cm, in thickness.

18. The covering as claimed in one of claims 16 or 17, **characterized in that** said sub-layer is coated with a finishing layer having a thickness not exceeding 5 mm or a permeability to water vapor above 300 g/m²/day or, in the case of a finishing layer including at least pigments and /a binder, a ratio of the proportion of the pigments and binder(s) greater than 4.
